# FASCICULE DE BREVET EUROPEEN

(11) **EP 2 164 719 B1**
(45) Date de publication et mention de la délivrance du brevet: **18.01.2012**
(21) Numéro de dépôt: 08805985.2
(22) Date de dépôt: 12.06.2008
(51) Int. Cl.: B60J 5/04, B62D 21/15, B62D 33/06

(54) **MODULE STRUCTUREL D'EMMARCHEMENT**
STRUKTURSCHRITTMODUL
STRUCTURAL STEP MODULE

(30) Priorité: 13.06.2007 FR 0755738
(43) Date de publication de la demande: 24.03.2010
(73) Titulaire: Inoplast, 07100 Annonay (FR)
(72) Inventeur: DELAVALLE, Dominique, F-01160 Pont D'ain (FR); BOSC, Arnaud, F-07130 Saint Peray (FR); MONTANVERT, Pierre, F-69100 Villeurbanne (FR)
(74) Mandataire: Remy, Vincent Noel Paul
(86) Numéro de dépôt international: PCT/FR2008/051050
(87) Numéro de publication internationale: WO 2009/004221

(56) Documents cités:
- EP-A- 0 227 962
- WO-A-02/070327

## Description

La présente invention concerne le domaine technique des véhicules automobiles et plus particulièrement le domaine technique des véhicules automobiles de type poids-lourd.

En général, un véhicule de type poids-lourd, en particulier ceux de plus de 3,5 Tonnes, comprend une cabine de conduite posée sur un châssis et un marche-pied destiné à faciliter l'accès à l'intérieur de la cabine. Ce marche-pied est généralement solidement fixé au châssis du véhicule et est prévu pour supporter une charge d'environ 200 kilogrammes.

Par ailleurs, le véhicule comprend également, au voisinage de ce marche-pied, un support de bloc optique fixé au châssis et portant le ou les blocs optiques avant.

On connaît déjà du document WO 02/070327 un module d'emmarchement destiné à être rapporté à un élément du châssis et comprenant des moyens de support d'un bloc optique avant.

L'invention a pour objet un module d'emmarchement conforme à la revendication 1.

Du fait que le module d'emmarchement comprend des moyens de support pour un bloc optique avant, le module et le bloc optique peuvent être pré-assemblés, ce qui permet d'optimiser le procédé d'assemblage du véhicule.

En dépit de leur proximité dans le véhicule automobile, le marche-pied et les blocs optiques avant n'étaient pas, de façon classique, réunis en une seule pièce. Cette situation résultait d'une approche traditionnelle consistant à traiter séparément la partie avant du véhicule automobile et la partie latérale permettant l'accès à la cabine.

Cette séparation se justifiait d'autant plus que, pour des raisons esthétiques, les pièces constituant la partie avant du véhicule automobile doivent être positionnées de façon précise les unes par rapport aux autres alors que les contraintes de positionnement du marche-pied sont beaucoup moins strictes.

L'assemblage en dehors de la chaîne principale de montage du module, comportant de nombreuses pièces fonctionnelles et d'aspect, procure de nombreux avantages, telle qu'une gestion plus économique de la diversité des pièces du module.

En outre, le démontage et montage aisé du module selon l'invention sur le châssis du véhicule permettent une réparation plus simple des éléments endommagés du module, ainsi qu'un accès plus facile vers des pièces du compartiment moteur de la cabine.

Par ailleurs, ce module d'emmarchement comprend des points de fixation d'une peau externe.

Un module d'emmarchement peut également comprendre un réseau de nervures de soutien d'une peau externe et/ou un réseau de nervures d'absorption pour traiter des chocs piétons et/ou des chocs civiques, par limitation de l'agressivité du véhicule par rapport à son environnement.

Dans un mode de réalisation particulier, au moins une marche du module est escamotable. Cela permet d'améliorer l'aérodynamisme du véhicule et donc de diminuer la consommation du véhicule. Le bruit du véhicule en fonctionnement peut également être atténué. En outre, cela évite le dépôt de salissures sur la marche, ce qui permet d'améliorer la sécurité du conducteur, moins susceptible de glisser lors de la montée ou de la descente de la cabine.

L'invention a également pour objet un coin de pare-chocs, comprenant un module structurel selon l'invention et une peau externe.

Un coin de pare-chocs peut en outre comporter l'une ou l'autre des caractéristiques selon lesquelles :
- la peau comporte une extension destinée à coiffer une roue du véhicule et à servir de garde-boue ;
- le matériau du module est une résine thermodurcissable ou un matériau composite à base de résine thermodurcissable et de fibres de renfort, par exemple SMC (Sheet Moulding Compound) et le matériau de la peau est un matériau thermoplastique ;
- le module comporte un renfort métallique.

L'invention a enfin pour objet un pare-chocs de véhicule automobile comprenant deux coins de pare-chocs selon l'invention et une traverse qui relie les deux modules et une peau externe destinée à revêtir la traverse.

En particulier, le matériau de la peau externe de la traverse est une résine thermoplastique telle que du polypropylène.

L'invention sera mieux comprise à la lecture de la description qui va suivre, donnée uniquement à titre d'exemple et faite en se référant aux dessins dans lesquels :
- la figure 1 est une vue en perspective d'un véhicule automobile de type poids-lourd et d'un pare-chocs comprenant un module d'emmarchement selon l'invention ;
- la figure 2 est une vue éclatée du pare-chocs du véhicule automobile de la figure 1 ;
- la figure 3 est une vue en perspective partielle du véhicule de la figure 1;
- la figure 4 est une vue détaillée d'un module d'emmarchement du pare-chocs des figures 1 à 3.

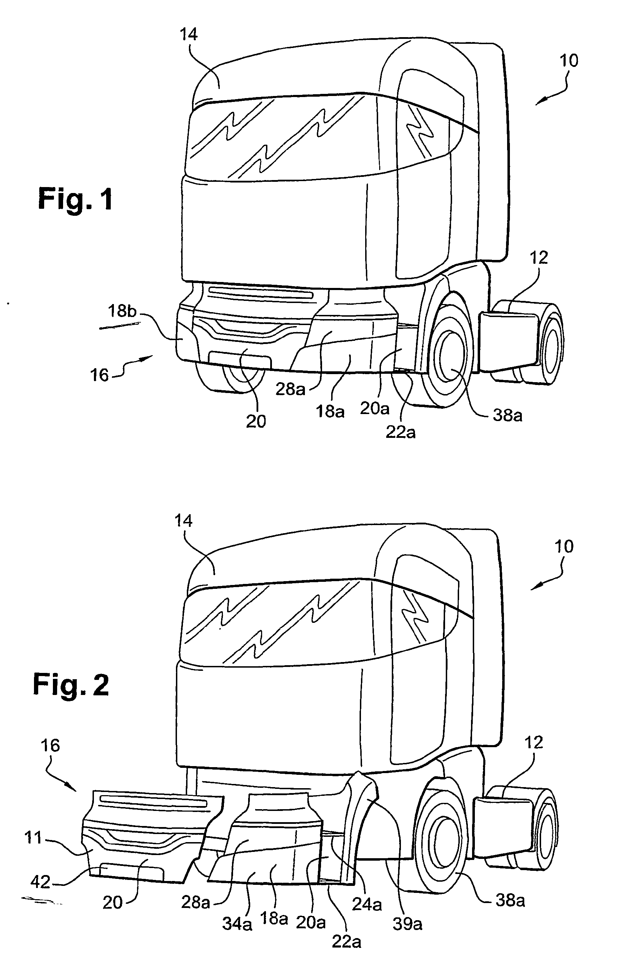

On a représenté sur les figures 1 à 3 un véhicule automobile de type poids lourd, désigné par la référence générale 10.

Le véhicule 10 comprend un châssis 12 et une cabine de conduite 14 posée sur ce châssis 12. La cabine 14 est reliée de façon classique à ce châssis 12.

Le véhicule 10 comporte encore un pare-chocs 16. En particulier, le pare-chocs 16 comprend deux coins de pare-chocs 18a et 18b et une traverse 20 qui relie les deux coins de pare-chocs 18a et 18b.

Par la suite, on notera les références numériques des éléments associés au coin de pare-chocs gauche 18a du véhicule 10 avec un indice a et les éléments associés au coin de pare-chocs 18b droit du véhicule 10 avec un indice b.

Dans la suite de la description, nous allons décrire en détail le coin de pare-chocs gauche 18a représenté sur les figures. Bien entendu, la description détaillée du coin de pare-chocs 18a s'applique également au coin de pare-chocs 18b.

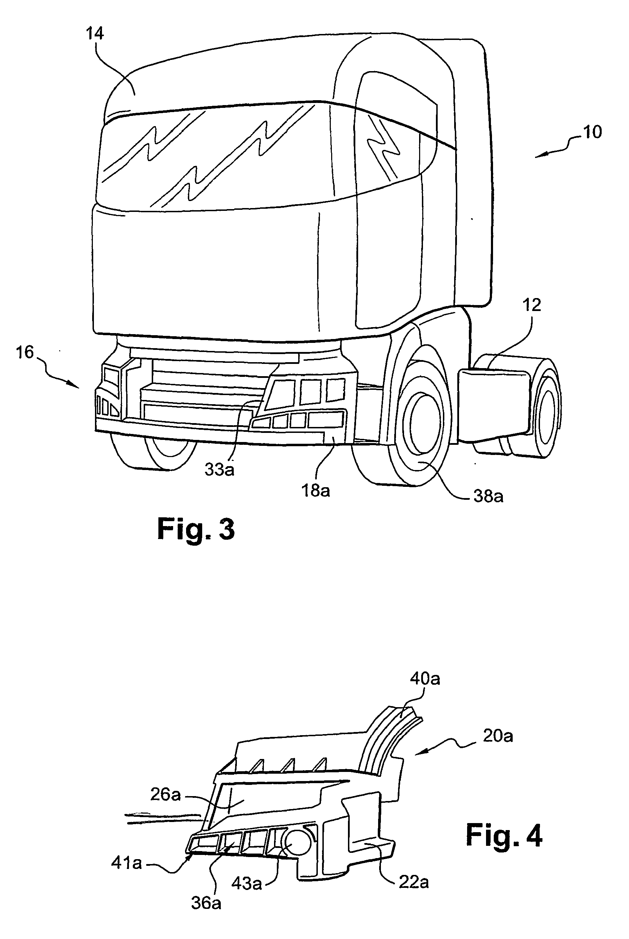

Le coin de pare-chocs 18a comprend un module structurel d'emmarchement 20a d'accès à la cabine de conduite 14 du véhicule 10 représenté en détail sur la figure 4.

Le module structurel d'emmarchement 20a est destiné à être rapporté à un élément du châssis 12 à l'aide de moyens de fixation classiques non représentés. Le module structurel d'emmarchement 20a comprend de façon classique au moins une marche 22a destinée à faciliter l'accès à la cabine de conduite 14 pour un passager ou conducteur du véhicule automobile. Comme on le voit sur les figures 1 et 2, la marche 22a comprend une grille 24a anti-dérapante en matière plastique ou métallique.

Le module structurel 20a comprend des moyens 26a de support d'un bloc optique avant 28a.

Ce module d'emmarchement 20a comprend encore des moyens de logement (non représentés) d'un réservoir destiné à contenir un produit, tel qu'un produit lave-glace. Par ailleurs, le module 20a est adapté pour porter des moyens de guide d'air (non représentés). Il peut également être prévu pour recevoir des dispositifs mécaniques, hydrauliques ou électriques (non représentés).

Le coin de pare-chocs 18a comprend encore une peau externe 34a destinée à revêtir le module structurel 20a. A cet effet, le module structurel 20a comprend des points de fixation 33a de la peau externe 34a.

Par ailleurs, le module structurel 20a peut également comprendre un réseau de nervures 36a d'absorption de l'énergie des chocs avec des piétons. Ces nervures 36a font saillie en avant du bloc optique 28a et flambent et/ou cassent en cas de choc avec un piéton ou un cycliste pour consommer une partie de l'énergie du choc avant que le piéton ou le cycliste ne rencontre le bloc optique 28a, considéré comme un point dur dangereux pour ce type de choc.

Les nervures 36a peuvent également être utiles en cas de choc contre un élément de mobilier urbain.

Dans la partie arrière du coin de pare-chocs 18a, le module structurel 20a comprend un prolongement 40a de forme arrondie destiné à suivre sensiblement le profil de la roue 38a du véhicule 10 et formant un soutien du pare-boue 39a.

Le module comprend également une grille d'air 41a ainsi que des moyens 43a de support d'un feu de signalisation.

Le module 20a est réalisé dans un matériau ayant une dureté supérieure au matériau de la peau externe 34a.

Ainsi, dans le cas présent, le matériau du module 20a est une résine thermodurcissable, telle que du polyester, ou un matériau composite à base de résine thermodurcissable et de fibres de renfort. Le matériau de la peau externe 34a est une résine thermoplastique, telle que du polypropylène. Mais il est possible également de réaliser le module 20a en polypropylène moyennant une structure suffisamment nervurée du module 20a ou en polypropylène renforcé fibres.

Une telle résine thermoplastique présente notamment l'avantage d'être adaptée pour être teintée dans la masse ce qui évite la nécessité d'appliquer une couche de peinture.

Le pare-chocs 16 comprend encore une traverse 42 qui relie les deux modules structurels 20a et 20b. Cette traverse 42 est fixée au châssis 12.

Cette traverse 42 a une fonction principale d'anti-encastrement et permet ainsi d'éviter qu'un véhicule automobile plus léger que le véhicule automobile de type poids lourd ne soit encastré sous le véhicule 10 lors d'un choc frontal.

Le pare-chocs 16 du véhicule 10 comporte encore une peau externe 11 destinée à revêtir la traverse 42. Le matériau de la peau externe 11 de la traverse 42 est une résine thermoplastique telle que du polypropylène.

Nous allons maintenant décrire un exemple de montage de modules d'emmarchement selon l'invention.

Lors de l'assemblage du véhicule 10, les éléments fonctionnels tels que le bloc optique avant, le réservoir et les moyens de guide d'air peuvent être avantageusement pré-assemblés sur chacun des deux modules structurels.

La peau externe est également fixée sur chaque module structurel au niveau des points de fixation 33a, par vissage et/ou clippage.

Une fois les deux coins de pare-chocs 18 assemblés, ils sont alors fixés aux extrémités de la traverse.

L'ensemble est alors rapporté sur le châssis 12 du véhicule 10.

On notera que l'invention n'est pas limitée au mode de réalisation décrit.

En variante, la marche du module peut être une marche escamotable.

En outre, le module peut également comprendre un coffre de rangement ou une trappe de maintenance pour accéder à des éléments fonctionnels du véhicule comme les ampoules des blocs optiques ou un actionneur de basculement de la cabine.

## Revendications

1. Module structurel (20a) d'emmarchement d'accès à une cabine de conduite (14) d'un véhicule automobile (10), destiné à être rapporté à un élément du châssis du véhicule automobile (10) et comprenant des moyens (26a) de support d'un bloc avant optique (28a), **caractérisé en ce qu'**il
comprend au moins un des éléments de la liste suivante :
- des moyens de logement d'un réservoir et/ou de dispositifs mécaniques et/ou hydrauliques et/ou électriques,
- au moins une trappe de maintenance, ménageant un accès à des éléments fonctionnels du véhicule,
- au moins un coffre de rangement.

2. Module (20a) selon la revendication 1, étant adapté pour porter des moyens de guide d'air.

3. Module (20a) selon l'une quelconque des revendications 1 à 2, comprenant des points de fixation d'une peau externe (34a).

4. Module (20a) selon l'une quelconque des revendications 1 à 3, comprenant un réseau de nervures (36a) de soutien d'une peau externe (34a) et/ou un réseau de nervures (36a) d'absorption pour traiter des chocs piétons.

5. Module (20a) selon l'une quelconque des revendications 1 à 4, comprenant une marche escamotable.

6. Coin de pare-chocs (18a, 18b), comprenant un module structurel (20a) selon l'une quelconque des revendications 1 à 5 et une peau externe (34a).

7. Coin de pare-chocs (18a, 18b) selon la revendication 6, dans lequel la peau comporte une extension destinée à coiffer une roue du véhicule et à servir de garde-boue.

8. Coin de pare-chocs (18a, 18b) selon la revendication 6 ou 7, dans lequel le matériau du module (20a) est une résine thermodurcissable ou un matériau composite à base de résine thermodurcissable et de fibres de renfort, par exemple du SMC (Sheet Moulding Compound), et le matériau de la peau (34a) est un matériau thermoplastique.

9. Pare-chocs (16) de véhicule automobile (10) comprenant deux coins de pare-chocs (18a, 18b) selon l'une quelconque des revendications 6 à 8 et une traverse (42) qui relie les deux modules et une peau externe (11) destinée à revêtir la traverse (42).

10. Pare-chocs selon la revendication 9, dans lequel le matériau de la peau externe (11) de la traverse (42) est une résine thermoplastique, telle que du polypropylène.

## Claims

1. A structural module (20a) providing an access step to a driver's cab (14) of a motor vehicle (10), the module being for fitting to an element of the chassis of the motor vehicle (10) and including means (26a) for supporting a front headlight unit (28a), the module being **characterized in that** it includes at least one of the elements in the following list:
• means for housing a tank and/or mechanical devices and/or hydraulic devices and/or electrical devices;
• at least one maintenance hatch providing access to functional elements of the vehicle; and
• at least one storage chest.

2. A module (20a) according to claim 1, being suitable for carrying air guide means.

3. A module (20a) according to claim 1 or claim 2, including fastener points for fastening an outer skin (34a) .

4. A module (20a) according to any one of claims 1 to 3, including an array of ribs (36a) for supporting an outer skin (34a) and/or an array of absorber ribs (36a) for dealing with pedestrian impacts.

5. A module (20a) according to any one of claims 1 to 4, including a retractable step.

6. A bumper corner (18a, 18b) comprising a structural module (20a) according to any one of claims 1 to 5, together with an outer skin (34a).

7. A bumper corner (18a, 18b) according to claim 6 wherein the skin includes an extension for covering a wheel of the vehicle and for acting as a mudguard.

8. A bumper corner (18a, 18b) according to claim 6 or claim 7, wherein the material of the module (20a) is a thermosetting resin or a composite material based on thermosetting resin and reinforcing fibers, e.g. sheet molding compound (SMC), and the material of the skin (34a) is a thermoplastic material.

9. A bumper (16) for a motor vehicle (10), the bumper comprising two bumper corners (18a, 18b) according to any one of claims 6 to 8 and a cross-member (42) interconnecting the two corners, together with an outer skin (11) for covering the cross-member (42).

10. A bumper according to claim 9, wherein the material of the outer skin (11) of the cross-member (42) is a thermoplastic resin, such as polypropylene.

## Patentansprüche

1. Strukturmodul (20a) für den Steigzugang zu einer Fahrzeugkabine (14) eines Kraftfahrzeugs (10), das dazu bestimmt ist, an ein Element des Chassis des Kraftfahrzeugs (10) angebaut zu werden und das Mittel (26a) zum Tragen eines vorderen Optikblocks (28a) aufweist, **dadurch gekennzeichnet, dass** es mindestens eines der Elemente der folgenden Liste audfweist:
- Mittel zum Aufnehmen eines Tanks und/oder mechanischer und/oder hydraulischer und/oder elektrischer Vorrichtungen,
- mindestens eine Wartungsklappe, die einen Zugang zu Funktionselementen des Fahrzeugs bildet,
- mindestens einen Stauraum.

2. Modul (20a) nach Anspruch 1, das Luftführungsmittel tragen kann.

3. Modul (20a) nach einem der Ansprüche 1 bis 2, das Befestigungspunkte einer Außenverkleidung (34a) aufweist.

4. Modul (20a) nach einem der Ansprüche 1 bis 3, das ein Netz von Rippen (36a) zum Stützen einer Außenverkleidung (34a) und/oder ein Netz von Absorptionsrippen (36a) zum Aufnehmen von Fußgängeraufprallen aufweist.

5. Modul (20a) nach einem der Ansprüche 1 bis 4, das eine versenkbare Stufe aufweist.

6. Stoßfängerecke (18a, 18b), die ein Strukturmodul (20a) nach einem der Ansprüche 1 bis 5 und eine Außenverkleidung (34a) aufweist.

7. Stoßfängerecke (18a, 18b) nach Anspruch 6, bei der die Verkleidung eine Erweiterung aufweist, die dazu bestimmt ist, oberhalb eines Rads des Fahrzeugs zu sitzen und als Kotflügel zu dienen.

8. Stoßfängerecke (18a, 18b) nach Anspruch 6 oder 7, bei der der Werkstoff des Moduls (20a) ein wärmehärtbares Harz oder ein Verbundwerkstoff auf der Grundlage von wärmehärtbarem Harz und Verstärkungsfasern ist, zum Beispiel SMC (Sheet Moulding Compound), und bei der der Werkstoff der Verkleidung (34a) ein Thermoplastwerkstoff ist.

9. Stoßfänger (16) für Kraftfahrzeug (10), der zwei Stoßfängerecken (18a, 18b) nach einem der Ansprüche 6 bis 8 aufweist und einen Querträger (42), der die zwei Module verbindet, und eine Außenverkleidung (11), die dazu bestimmt ist, den Querträger (42) zu bedecken.

10. Stoßfänger nach Anspruch 9, bei dem der Werkstoff der Außenverkleidung (11) des Querträgers (42) ein Thermoplastharz, wie zum Beispiel Polypropylen ist.
